# FASCICULE DE BREVET EUROPEEN

(11) **EP 0 591 087 B1**
(45) Date de publication et mention de la délivrance du brevet: **05.03.1997**
(21) Numéro de dépôt: 93490017.6
(22) Date de dépôt: 30.09.1993
(51) Int. Cl.: F16K 17/30

(54) **Dispositif coupe-circuit pour conduite de gaz en basse pression ou moyenne pression**
Absperrvorrichtung für Gasrohrleitungen unter niedrigem oder mittlerem Druck
Cut-off device for gas conduits under low or mean pressure

(30) Priorité: 01.10.1992 FR 9211976
(43) Date de publication de la demande: 06.04.1994
(73) Titulaire: S.A. HAUDIQUER INDUSTRIE, F-80530 Bethencourt sur Mer (FR)
(72) Inventeur: Cayol, André Jean Joseph, F-60150 Throurotte (FR); Sainz, Claude, F-60200 Compiegne (FR)
(74) Mandataire: Ecrepont, Robert

(56) Documents cités:
- DE-B- 1 181 015
- FR-A- 388 344
- FR-A- 430 357
- FR-A- 1 541 789
- FR-E- 20 073
- US-A- 716 916
- US-A- 2 610 822
- US-A- 2 882 921
- US-A- 2 899 981
- US-A- 3 260 274
- US-A- 3 380 474

## Description

L'invention se rapporte à un dispositif coupe-circuit pour conduite de gaz en basse pression ou moyenne pression.

Depuis longtemps, pour raccorder un appareil notamment de cuisson fonctionnant au gaz, il est connu d'utiliser un tuyau souple qui est enfilé sur le nez du robinet de distribution.

Le nez du robinet présente généralement des moyens pour diminuer le risque de voir le tuyau souple s'en séparer facilement.

Néanmoins, une séparation accidentelle ou volontaire reste toujours possible.

Les conséquences d'une telle séparation peuvent être graves ; c'est pourquoi il existe des dispositifs de sécurité qui coupent l'alimentation en gaz lorsque certaines conditions sont réunies.

Par exemple, est connu (EP-161348) un dispositif de sécurité qui comprend :
- un corps délimitant une chambre dans laquelle débouchent les extrémités de deux conduites qui, selon le sens de circulation du fluide, sont respectivement appelées conduite amont et conduite aval, dont l'une des extrémités constitue un siège pour un obturateur qui, logé dans la chambre précitée peut prendre deux positions singulières, l'une dite de sécurité lorsque l'obturateur s'applique sur le siège et l'autre dite ouverte lorsque cet obturateur est écarté de son siège pour laisser circuler librement le fluide de la conduite amont vers la conduite aval via la chambre et,
- des moyens pour déplacer l'obturateur entre les deux positions singulières précitées.

Ces moyens comprennent un ressort qui, prenant appui sur une des faces opposées de la chambre tend à déplacer l'obturateur dans un sens et des moyens qui exploite la pression différentielle du fluide entre les extrémités des conduites débouchant dans la chambre pour contrarier le ressort.

Dans ce dispositif connu, l'obturateur est un piston qui coulisse selon l'axe longitudinal de la chambre qui est cylindrique.

Le piston est constitué de deux disques reliés par une tige de manière à définir une chambre intermédiaire.

Les disques ont un diamètre tel que le contact de leur bord externe avec la paroi interne de la chambre assure l'étanchéité périphérique.

Ils présentent des perçages qui, sensiblement perpendiculaires à leurs faces permettent le passage du fluide de la conduite amont vers la conduite aval via la chambre intermédiaire.

La perte de charge induite par ce parcours particulier provoque le déplacement du piston en contrariant l'action du ressort.

Pour que l'étanchéité du piston avec la chambre soit bonne, le piston doit être parfaitement ajusté ce qui provoque des frottements importants.

On comprend que ce frottement du piston influe sur la sensibilité du dispositif et, de ce fait, un tel dispositif ne peut fonctionner correctement avec du gaz en basse pression ou moyenne pression.

De plus, la fabrication du piston est complexe.

On connait également (US-A-2.899.981) un dispositif de contrôle de débit d'un fluide mettant en oeuvre dans une chambre un disque de section sensiblement équivalente à ladite chambre dans lequel disque une langue est formée par découpe.

Cette langue reste maintenue par l'un de ses bords sur le disque.

En position dite de pleine ouverture la langue est sécante au plan du disque et le fluide circule par le passage aménagé entre le bord extérieur de la langue et le bord intérieur de la découpe du disque.

Sous l'effet d'une variation de pression la position de la langue change.

Le débit est régulé par la modification de la section de passage.

Toutefois, il n'y a jamais une étanchéité complète. Egalement la perte de charge d'un tel dispositif est importante.

Il ne s'agit pas d'un organe assurant l'étanchéité en cas d'incident.

En outre, il ne pourrait convenir à des circuits basse pression.

On connaît également (US-A-3.380.474) une valve qui en position ouverte s'étend sensiblement coaxialement à l'axe de la conduite dans laquelle elle est logée.

Cette valve présente des formes, tel qu'au dessus d'un différentiel de pression entre l'amont et l'aval, la valve vient s'appliquer sur son siège.

Pour cette réalisation, le siège et le clapet ont des formes excessivement compliquées qu'il est difficile de maitriser pour trouver une solution reproductible pour une valeur de déclenchement prédéterminée.

La réalisation d'un tel dispositif est très coûteux et le réglage du seuil de déclenchement est délicat.

Compte tenu de ces formes compliquées, il est difficile d'obtenir une étanchéité.

Est connu le brevet US 2.882.921 où une valve selon le préambule de la revendication 1 comprend :
- un lame d'étendue au moins égale à la section définie par le siège qui, dans la zone de la chambre où elle évolue, préserve entre son bord externe et au moins indirectement la face interne de la dite chambre un passage de surface déterminée et,
- un moyen élastique de rappel de ladite lame en position dite ouverte dans laquelle elle est maintenue dans un plan situé à une distance prédéterminée du siège et qui est transversal à la direction du flux de gaz provenant de l'amont, ce moyen de rappel présentant des caractéristiques de flexibilité prédéterminées pour que la position ouverte de la lame soit assurée en deçà d'une certaine valeur de vitesse du gaz engendrant sur cette lame une pression dynamique trop faible pour la plaquer sur son siège tandis qu'au delà de cette valeur, la lame est plaquée par la pression dynamique du gaz sur le siège et est conservée en position fermée par le différentiel de pression entre l'intérieur de la conduite amont et la conduite aval.

Selon cette réalisation, ce volet est maintenu en traction dans un plan sécant au flux par deux ressorts de traction.

Ce système est monostable et, de ce fait, ce n'est que progressivement que le volet vient s'appliquer sur son siège.

Un des résultats que l'invention vise à obtenir est un dispositif coupe-circuit du type cité plus haut, qui puisse fonctionner en basse pression ou moyenne pression et qui soit très simple à réaliser.

A cet effet, l'invention a pour objet un tel dispositif notamment **caractérisé** en ce que :
- d'une part, la lame est maintenue dans la chambre par au moins deux pattes régulièrement réparties angulairement autour de la lame, lesquelles pattes sont associées avec cette lame de manière à créer un système bi-stable de sorte que la lame peut occuper deux positions singulières situées de part et d'autre d'un plan passant par les points d'attache des pattes précitées au corps du dispositif et pour l'une des positions singulières précitées la lame vient en appui sur le siège de manière à isoler la conduite aval de la chambre et,
- d'autre part, le dispositif de sécurité comprend un moyen de rétablissement du débit après rétablissement de la conduite.

L'invention sera bien comprise à l'aide de la description ci-après faite à titre d'exemple non limitatif en regard du dessin ci-annexé qui représente schématiquement :
- figure 1 : le dispositif vu en coupe axiale,
- figure 2 : un détail de la figure 1.

En se reportant au dessin, on voit que le dispositif 1 de sécurité comprend :
- un corps 2 délimitant au moins indirectement une chambre 3 dans laquelle débouchent les extrémités 4, 5 de deux conduites 6, 7 qui, selon le sens S de circulation du fluide, sont respectivement appelées conduite amont 6 et conduite aval 7, dont l'une des extrémités constitue un siège 9 pour un obturateur 8 qui, logé dans la chambre 3 précitée, peut prendre deux positions singulières, l'une dite de sécurité lorsque l'obturateur 8 s'applique sur le siège et l'autre dite ouverte lorsque cet obturateur 8 est écarté de son siège 9 et laisse circuler librement le fluide de la conduite amont 6 vers la conduite 7 aval via la chambre 3 et,
- des moyens 8a pour déplacer l'obturateur 8 entre les deux positions singulières précitées en fonction du différentiel de pression existant entre la pression amont et la pression aval.

L'obturateur 8 comprend :
- une lame 8 d'étendue au moins égale à la section définie par le siège 9 qui, dans la zone de la chambre où elle évolue, préserve entre son bord externe 10 et au moins indirectement la face interne 11 de la dite chambre un passage 12 de surface déterminée et,
- un moyen élastique 8a de rappel de ladite lame en position dite ouverte dans laquelle elle est maintenue dans un plan situé à une distance prédéterminée du siège et qui est transversal à la direction F du flux de gaz provenant de l'amont, ce moyen de rappel 8a présentant des caractéristiques de flexibilité prédéterminées pour que la position ouverte de la lame soit assurée en deçà d'une certaine valeur de vitesse du gaz engendrant sur la lame une pression dynamique trop faible pour plaquer la lame sur son siège tandis qu'au delà de cette valeur, la lame est plaquée par la pression dynamique du gaz sur le siège et est conservée en position fermée par le différentiel de pression entre l'intérieur de la conduite amont et la conduite aval qui est notamment à la pression atmosphérique.

Cette lame 8 est maintenue en position requise par au moins une patte 13a, l'ensemble formé par les pattes 13a et la lame est au moins localement flexible de sorte que c'est la flexibilité au moins partielle de l'ensemble qui rappelle la lame en position requise en fonction de la valeur du différentiel de pression.

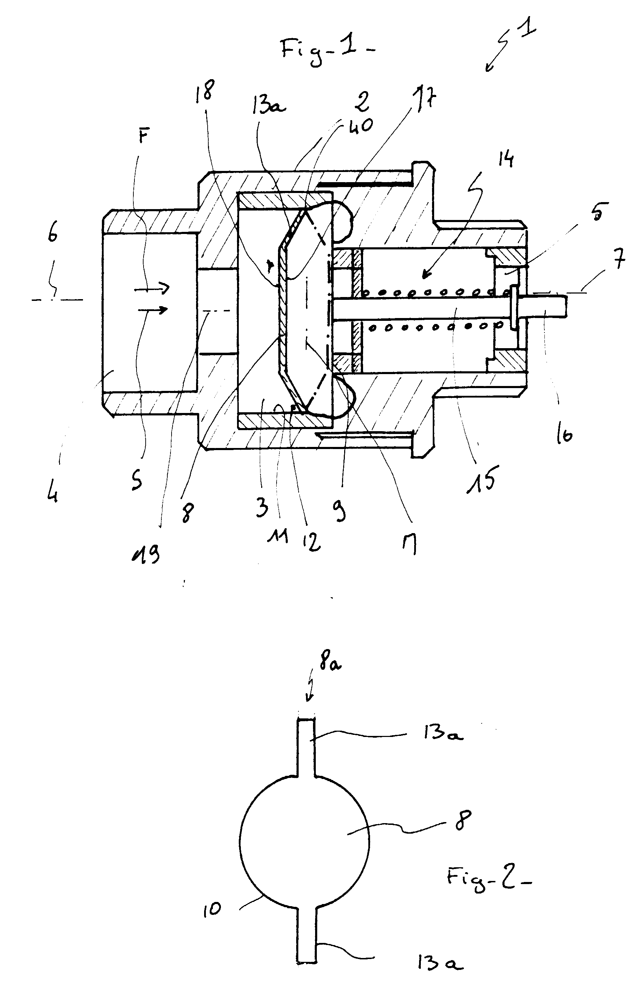

Selon une caractéristique essentielle de l'invention (figures 1 et 2), la lame est maintenue dans la chambre par au moins deux pattes régulièrement réparties angulairement autour de la lame, lesquelles pattes sont associées avec cette lame de manière à créer un système bi-stable de sorte que la lame peut occuper deux positions singulières situées de part et d'autre d'un plan M passant par les points d'attache 40 des pattes précitées au corps du dispositif et pour l'une des positions singulières précitées la lame 8 vient en appui sur le siège de manière à isoler la conduite aval de la chambre.

L'une des positions dite fermée est représentée en trait mixte sur la figure 1.

Les pattes de maintien de la lame établissent une précontrainte de flambage qui fait positionner l'ensemble que constitue la lame et les pattes soit à l'état concave soit à l'état convexe.

La lame peut être rigide et rester sensiblement plane mais il pourrait s'agir d'une lame flexible.

L'inversion de sens se fait à partir d'une valeur seuil prédéterminée.

Selon l'invention, le dispositif de sécurité comprend un moyen 14 de rétablissement du débit après rétablissement de la conduite.

Ce moyen 14 commande donc le déplacement volontaire du volet depuis sa position de sécurité jusqu'à la position ouverte.

Dans une forme de réalisation, le moyen 14 de commande du déplacement est un poussoir 15 qui, guidé en translation, a sa face active qui, par un moyen de manoeuvre 16, peut être mise en contact avec celle 17 des faces 17, 18 de la lame qui est tournée vers l'aval et repousser la lame de son siège permettant l'échappement du gaz contenu dans la conduite amont et, ce faisant, de permettre le rééquilibrage des pressions amont et aval permettant alors de relâcher la commande.

Le moyen de manoeuvre 16 est l'une des extrémités du poussoir 15.

Ce poussoir peut présenter un moyen de rappel dans une position préférentielle.

Dans une autre forme de réalisation (non représentée), au lieu d'un poussoir comme moyen de commande du déplacement de la lame, le dispositif de sécurité comprend un dispositif de fuite contrôlée reliant la zone située en amont de cette lame et celle située en aval.

Il s'agit, par exemple, d'une fuite située entre le siège de l'obturateur et la lame ou bien encore d'un canal de faible diamètre reliant les zones amont et aval précitées.

Ainsi, lorsqu'en aval du dispositif de sécurité, il se produit une rupture de la canalisation reliant le dispositif à un appareil consommateur (non représenté) de gaz, la pression en aval du dispositif chute brutalement ce qui provoque une élévation du différentiel de pression qui est alors suffisant pour faire fléchir le volet et l'appliquer sur son siège.

L'épaisseur de la lame, le différentiel de pression et la surface de la lame qui est soumise à la pression du flux amont déterminent le matériau constituant le volet.

Par exemple, le matériau est un polyimide du type de celui vendu sous la marque KAPTON.

Dans une forme avantageuse de réalisation, au lieu que le volet soit sensiblement perpendiculaire à l'axe 19 longitudinal défini par le corps du dispositif, le volet est placé dans un plan incliné par rapport à cet axe 19.

L'extrémité de la conduite amont est prolongée par une buse courbe qui, dans sa partie terminale est sensiblement perpendiculaire au volet 8 de manière que le flux provenant de l'amont soit également orienté perpendiculairement au volet.

Avec le même encombrement diamétral et la même distance entre le bord du volet et la face interne de la chambre, en inclinant le volet, on augmente la section de passage entre le bord externe du volet et la paroi interne de la chambre.

## Revendications

1. Dispositif coupe-circuit pour conduite de gaz comprenant :
- un corps (2) délimitant au moins indirectement une chambre (3) dans laquelle débouchent les extrémités (4, 5) de deux conduites (6, 7) qui, selon le sens (S) de circulation du fluide, sont respectivement appelées conduite amont (6) et conduite aval (7), dont l'une des extrémités constitue un siège (9) pour un obturateur (8) qui, logé dans la chambre (3) précitée, peut prendre deux positions singulières, l'une dite de sécurité lorsque l'obturateur (8) s'applique sur le siège et l'autre dite ouverte lorsque cet obturateur (8) est écarté de son siège (9) et laisse circuler librement le fluide de la conduite amont (6) vers la conduite (7) aval via la chambre (3) et,
- des moyens (8a) pour déplacer l'obturateur (8) entre les deux positions singulières précitées en fonction du différentiel de pression existant entre la pression amont et la pression aval,
ce dispositif comprenant en outre :
- une lame (8) d'étendue au moins égale à la section définie par le siège (9) qui, dans la zone de la chambre où elle évolue, préserve entre son bord externe (10) et au moins indirectement la face interne (11) de la dite chambre un passage (12) de surface déterminée et,
- un moyen élastique (8a) de rappel de ladite lame en position dite ouverte dans laquelle elle est maintenue dans un plan situé à une distance prédéterminée du siège et qui est transversal à la direction (F) du flux de gaz provenant de l'amont, ce moyen de rappel (8a) présentant des caractéristiques de flexibilité prédéterminées pour que la position ouverte de la lame soit assurée en deçà d'une certaine valeur de vitesse du gaz engendrant sur la lame une pression dynamique trop faible pour plaquer la lame sur son siège tandis qu'au delà de cette valeur, la lame est plaquée par la pression dynamique du gaz sur le siège et est conservée en position fermée par le différentiel de pression entre l'intérieur de la conduite amont et la conduite aval,
ce dispositif étant **caractérisé** en ce que, d'une part, la lame est maintenue dans la chambre par au moins deux pattes régulièrement réparties angulairement autour de la lame, lesquelles pattes sont associées avec cette lame de manière à créer un système bi-stable de sorte que la lame peut occuper deux positions singulières situées de part et d'autre d'un plan M passant par les points d'attache (40) des pattes précitées au corps du dispositif et pour l'une des positions singulières précitées la lame (8) vient en appui sur le siège de manière à isoler la conduite aval de la chambre et, d'autre part, le dispositif de sécurité comprend un moyen (14) de rétablissement du débit après rétablissement de la conduite.

2. Dispositif selon la revendication 1 **caractérisé** en ce que le moyen (14) de rétablissement du débit est un poussoir (15) qui, guidé en translation, a sa face active qui, par un moyen de manoeuvre (16), peut être mise en contact avec celle (17) des faces (17, 18) de la lame qui est tournée vers l'aval et repousser la lame de son siège permettant l'échappement du gaz contenu dans la conduite amont et, ce faisant, de permettre le rééquilibrage des pressions amont et aval permettant alors de relâcher la commande.

3. Dispositif selon la revendication 1 **caractérisé** en ce que le moyen de rétablissement du débit est un dispositif de fuite contrôlée reliant la zone située en amont de cette lame et celle située en aval.

4. Dispositif selon la revendication 1 **caractérisé** en ce que le volet est placé dans un plan incliné par rapport à l'axe (19) longitudinal du corps du dispositif.

5. Dispositif selon la revendication 4 **caractérisé** en ce que l'extrémité de la conduite amont est prolongée par une buse courbe qui, dans sa partie terminale est sensiblement perpendiculaire au volet (8) de manière que le flux provenant de l'amont soit également orienté perpendiculairement au volet.

## Claims

1. A cut-off device for a gas pipe, comprising :
- a body (2) delimiting at least indirectly a chamber (3) into which there issue the ends (4, 5) of two pipes (6, 7) which are - in accordance with the fluid circulation direction (S) - designated as upstream pipe (6) and downstream pipe (7) respectively, one of the ends of the latter constituting a seat (9) for an obturator (8) which, housed in the above-mentioned chamber (3), can assume two distinct positions, one position known as the safety position being assumed when the obturator (8) applies itself to the seat and the other position known as the open position being assumed when this obturator (8) is at a distance from its seat (9) and allows the fluid to circulate freely from the upstream pipe (6) to the downstream pipe (7) via the chamber (3), and
- means (8a) to move the obturator (8) between the two above-mentioned distinct positions according to the pressure differential existing between the upstream pressure and the downstream pressure,
this device comprising moreover:
- a lamina (8) - of dimensions at least equal to the cross-section defined by the seat (9) - which - in the chamber zone in which it moves - keeps a passage (12) of determined surface area between its outer edge (10) and at least indirectly the inner surface (11) of the said chamber, and
- resilient means (8a) to return the said lamina to the position known as open in which it is kept in a plane located at a predetermined distance from the seat and which is transverse to the direction (F) of the gas stream originating from upstream, this return means (8a) having predetermined resilience characteristics in order that the open position of the lamina is guaranteed below a certain gas speed value producing a dynamic pressure on the lamina which is too low to apply the lamina against its seat, while above this value, the lamina is applied against the seat by the dynamic pressure of the gas and is kept in the closed position by the pressure differential between the interior of the upstream pipe and the downstream pipe,
this device being characterised in that on the one hand the lamina is kept in position in the chamber by at least two lugs angularly uniformly distributed around the lamina, which lugs are associated with this lamina in such a manner as to create a bi-stable system so that the lamina can occupy two distinct positions located on either side of a plane M passing through the points of attachment (40) of the above-mentioned lugs to the body of the device and in one of the above-mentioned distinct positions the lamina (8) rests on the seat so as to isolate the downstream pipe from the chamber, and on the other hand the safety device comprises a means (14) for restoration of the flow rate after restoration of the pipe.

2. A device in accordance with Claim 1, characterised in that the means (14) for restoration of the flow rate is a push rod (15) which, guided in translational motion, has an active face which can by means of a control means (16) be brought into contact with that (17) of the faces (17, 18) of the lamina which is directed downstream and push the lamina away from its seat allowing escape of the gas contained in the upstream pipe and thus allowing rebalancing of the upstream and downstream pressures allowing control to be relaxed.

3. A device in accordance with Claim 1, characterised in that the means for restoration of the flow rate is a controlled leakage device linking the zone located upstream of this lamina and that located downstream.

4. A device in accordance with Claim 1, characterised in that the flap is placed in a plane at an incline in relation to the longitudinal axis (19) of the body of the device.

5. A device in accordance with Claim 4, characterised in that the end of the upstream pipe is extended by a curved duct whose end part is substantially perpendicular to the flap (8) so that the stream originating from upstream is also directed perpendicular to the flap.

## Patentansprüche

1. Absperrvorrichtung für Gasrohrleitungen mit:
- einem Korpus (2), in welchem zumindest indirekt eine Kammer (3) eingeschlossen ist, in welcher die Enden (4, 5) von zwei Leitungen (6, 7) münden, welche entsprechend der Fließrichtung (S) des Strömungsmittels jeweils als anströmseitige (6) bzw. abströmseitige (7) Leitung bezeichnet werden, wovon das eine Ende einen Sitz (9) für ein Verschlußteil (8) bildet, das in der vorgenannten Kammer (3) angeordnet ist und zwei einzelne Positionen einnehmen kann, wovon die eine die sogenannte Sicherheitsstellung ist, in welcher das Verschlußteil (8) sich gegen den Sitz anlegt, und die andere die sogenannte Öffnungsstellung ist, in welcher dieses Verschlußteil(8) von seinem Sitz (9) abgehoben ist und das Strömungsmittel ungehindert von der anströmseitigen Leitung (6) über die Kammer (3) zur abströmseitigen Leitung (7) fließen läßt, und
- Einrichtungen (8a) zum Verlagern des Verschlußteils (8) zwischen den beiden vorgenannten einzelnen Positionen in Abhängigkeit von dem Druckunterschied zwischen dem Druck auf der Anströmseite und der Abströmseite,
wobei diese Vorrichtung außerdem umfaßt:
- eine Zunge (8), deren Erstreckung zumindest gleich dem vom Sitz (9) definierten Querschnitt ist und die im Bereich der Kammer, wo sie ihre Bewegungen ausführt, zwischen ihrem äußeren Rand (10) und zumindest indirekt der Innenfläche (11) der Kammer einen Durchlaß (12 mit vorgegebener Fläche aufrechterhält, und
- eine elastische Einrichtung (8a) zum Rückstellen der Zunge (8) in der sogenannten Öffnungsstellung, in welcher sie in einer Ebene gehalten wird, die in vorgegebenem Abstand von dem Sitz liegt und quer zur Richtung (F) des von der Anströmseite kommenden Gasstroms verläuft, wobei diese Rückstelleinrichtung (8a) ein vorgegebenes Elastizitätsverhalten aufweist, damit die Öffnungsstellung der Zunge diesseits eines bestimmten Wertes der Gasgeschwindigkeit gewährleistet ist, welche einen dynamischen Druck auf die Zunge erzeugt, der zu schwach ist, um die Zunge gegen ihren Sitz anzulegen, wohingegen jenseits dieses Wertes die Zunge durch den dynamischen Gasdruck auf den Sitz angelegt und durch den Druckunterschied zwischen dem Innenraum der anströmseitigen Leitung und der abströmseitigen Leitung in geschlossener Position gehalten wird,
**dadurch gekennzeichnet**, daß einerseits die Zunge in der Kammer durch mindestens zwei Laschen gehalten wird, die in gleichmäßigen Winkelabständen um die Zunge herum verteilt sind und mit dieser Zunge in der Weise verbunden sind, daß ein bistabiles System entsteht, so daß die Zunge zwei einzelne Positionen einnehmen kann, die zu beiden Seiten einer Ebene M liegen, welche durch die Ansatzpunkte (40) der vorgenannten Laschen am Korpus der Vorrichtung verläuft, und bei einer der vorgenannten einzelnen Positionen die Zunge (8) in Anlage gegen den Sitz in der Weise kommt, daß die anströmseitige Leitung von der Kammer getrennt wird, und daß andererseits die Sicherheitseinrichtung ein Mittel (14) zur Wiederherstellung der Durchflußmenge nach Wiederherstellung der Leitung aufweist.

2. Vorrichtung nach Anspruch 1, **dadurch gekennzeichnet**, daß das Mittel (14) zur Wiederherstellung der Durchflußmenge ein Schieber (15) ist, welcher unter geführter Verschiebung an seiner Wirkfläche mittels einer Betätigungseinrichtung (16) mit derjenigen (17) der Flächen (17, 18) der Zunge in Kontakt gebracht werden kann, die zur Abströmseite hin gerichtet ist, und die Zunge von ihrem Sitz zurückdrücken und dabei das Entweichen von Gas gestatten kann, das in der anströmseitigen Leitung enthalten ist, und dabei den erneuten Ausgleich der Drücke auf der Anströmseite und der Abströmseite gestatten kann, wobei nun die Lösung der Steuerung möglich wird.

3. Vorrichtung nach Anspruch 1, **dadurch gekennzeichnet**, daß die Einrichtung zur Wiederherstellung der Durchflußleitung eine Einrichtung mit gesteuertem Verlust ist, welche den Bereich auf der Anströmseite dieser Zunge und den Bereich auf der Abströmseite miteinander verbindet.

4. Vorrichtung nach Anspruch 1, **dadurch gekennzeichnet**, daß die Klappe in einer Ebene angeordnet ist, die gegenüber der Längsachse (19) des Korpus der Vorrichtung geneigt ist.

5. Vorrichtung nach Anspruch 4, **dadurch gekennzeichnet**, daß das Ende der anströmseitigen Leitung durch eine gekrümmte Düse verlängert wird, die in ihrem Endabschnitt im wesentlichen senkrecht zur Klappe (8) so steht, daß der von der Anströmseite her kommende Strom ebenfalls senkrecht zur Klappe gerichtet ist.
